(19) Europäisches Patentamt
European Patent Office
Office européen des brevets

(11) EP 4 446 355 A1

(12) EUROPEAN PATENT APPLICATION
published in accordance with Art. 153(4) EPC

(43) Date of publication:
**16.10.2024 Bulletin 2024/42**

(21) Application number: **23746908.5**

(22) Date of filing: **23.01.2023**

(51) International Patent Classification (IPC):
***C08G 18/50*** *(2006.01)* ***C08G 18/48*** *(2006.01)*
***C08G 18/58*** *(2006.01)* ***C08L 63/00*** *(2006.01)*
***C08L 71/03*** *(2006.01)*

(52) Cooperative Patent Classification (CPC):
**C08G 18/48; C08G 18/50; C08G 18/58; C08L 63/00; C08L 71/03**

(86) International application number:
**PCT/JP2023/001980**

(87) International publication number:
**WO 2023/145697 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.01.2022 JP 2022011694**
**13.01.2023 JP 2023004082**

(71) Applicant: **Tosoh Corporation**
**Yamaguchi 746-8501 (JP)**

(72) Inventors:
- **SUZUKI, Mayuka**
  **Yokkaichi-shi Mie 510-8540 (JP)**
- **OOTANI, Yasuho**
  **Yokkaichi-shi Mie 510-8540 (JP)**
- **OOHAMA, Toshio**
  **Yokkaichi-shi Mie 510-8540 (JP)**

(74) Representative: **TBK**
**Bavariaring 4-6**
**80336 München (DE)**

# (54) CHLORINE-CONTAINING POLYETHER POLYOL COMPOSITION

(57) Provided is a chlorine-containing polyether polyol that serves as a raw material for producing polyurethane having excellent mechanical properties, heat stability, moldability, and flame resistance. The chlorine-containing polyether polyol composition is characterized by containing 0.5 to 20 parts by weight of an epoxy compound with respect to 100 parts by weight of the chlorine-containing polyether polyol which has a molecular weight of 400 to 5,000.

EP 4 446 355 A1

## Description

### Technical Field

The present disclosure relates to a chlorine-containing polyether polyol having favorable heat stability and moldability, which serves as a raw material of polyurethane having excellent mechanical properties and flame resistance.

### Background Art

Polyurethane is produced by mixing a polyol with an isocyanate compound.

In the related art, a flame retardant has been added to make polyurethane foam flame retardant. A liquid flame retardant that is liquid at ordinary temperature, which is represented by a phosphoric acid ester monomer, has been mainly used as the flame retardant.

In general, when a phosphoric acid ester monomer which is liquid at ordinary temperature is used as a flame retardant for polyurethane foam, there is a problem that the phosphoric acid ester monomer easily causes a decrease in the moldability of polyurethane in association with an increase in the usage amount of the flame retardant since it has a plasticizing action.

In order to solve the above problem, a method using a chlorinated polyether polyol obtained by subjecting 3,4-dichloro-1,2-epoxybutane to ring-opening polymerization has been proposed (Patent Document 1).

### Citation List

### Patent Literature

Japanese Unexamined Patent Publication No. H2-202573

### Summary of Invention

### Technical Problem

However, such a chlorinated polyether polyol has insufficient heat stability since the chlorinated polyether polyol contains a thermally unstable chlorine group. In addition, in a case of being used as a raw material of polyurethane, the hydrochloric acid generated by thermal decomposition reduces the activity of the polyurethane catalyst, and thus there is a problem in moldability, and the generated polyurethane is inferior in mechanical properties.

### Solution to Problem

That is, the present invention is the following [1] to [7].

[1] A chlorine-containing polyether polyol composition containing:
0.5 to 20 parts by weight of an epoxy compound with respect to 100 parts by weight of a chlorine-containing polyether polyol having a molecular weight of 400 to 5,000.

[2] The chlorine-containing polyether polyol composition according to [1], wherein the chlorine-containing polyether polyol is a compound represented by the following Formula (1).

[Chemical Formula 1]

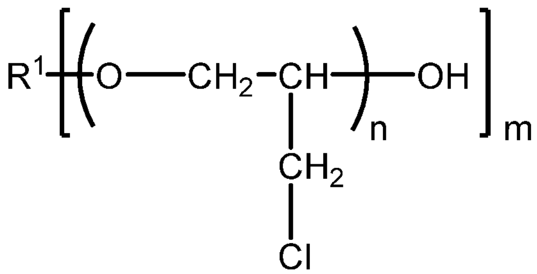

(1)

(In the Formula (1), $R^1$ represents a hydroxy compound residue having a molecular weight of 100 or more and 2,500 or less, n represents an integer of 1 or more and less than 25, and m represents 2 or 3)

[3] The chlorine-containing polyether polyol composition according to [1] or [2], wherein the epoxy compound is a liquid epoxy compound having an epoxy equivalent of 100 to 1,000.
[4] The chlorine-containing polyether polyol composition according to any one of [1] to [3], wherein the epoxy compound is any of an epoxidized vegetable fat oil or bisphenol A diglycidyl ether.
[5] The chlorine-containing polyether polyol composition according to any one of [1] to [4], further containing:
1 to 100 ppm of an aluminum compound.
[6] The chlorine-containing polyether polyol composition according to [5], wherein the aluminum compound is aluminum hydroxide.
[7] A polyurethane that is a reaction product of the chlorine-containing polyether polyol composition according to any one of [1] to [6] and an isocyanate compound.

## Advantageous Effects of Invention

The chlorine-containing polyether polyol composition, which is one aspect of the present invention, serves as a raw material of polyurethane having excellent mechanical properties, heat stability, moldability, and flame resistance.

## Description of Embodiments

Hereinafter, exemplary aspects for executing the present invention will be described in detail.

<Chlorine-containing polyether polyol composition>

A chlorine-containing polyether polyol composition according to one aspect of the present invention contains 0.5 to 20 parts by weight of an epoxy compound with respect to 100 parts by weight of a chlorine-containing polyether polyol having a molecular weight of 400 to 5,000.

<Chlorine-containing polyether polyol>

The chlorine-containing polyether polyol contained in the chlorine-containing polyether polyol composition according to one aspect of the present invention has a molecular weight of 400 to 5,000, preferably 400 to 3,000. In a case where the molecular weight is less than 400, a sufficient effect of improving mechanical properties is not exhibited, and in a case where the molecular weight exceeds 5,000, handling worsens due to an increase in viscosity, and concurrently compatibility with an epoxy compound is deteriorated, resulting in white turbidity when a chlorine-containing polyether polyol composition is prepared.
The chlorine-containing polyether polyol is not particularly limited; however, examples thereof include those having the structure shown in the above-described Formula (1).
In the above-described Formula (1), $R^1$ represents a hydroxy compound residue having a molecular weight of 100 or more and 2,500 or less. The hydroxy compound residue represented by $R^1$ is not particularly limited; however, examples thereof include residues of dipropylene glycol, tripropylene glycol, 1,6-hexanediol, 1,9-nonanediol, 2,5-hexanediol, 1,3-cyclohexanediol, 3-methylpentane-1,5-diol, 2,5-dimethyl-2,5-hexanediol, hexanetriol, 2-naphthol, bisphenol, a polyether polyol having a hydroxyl group, a polyester polyol, a polycarbonate polyol and the like.
Among these hydroxy compound residues, a residue of tripropylene glycol, 3-methylpentane-1,5-diol, a polyether polyol having a molecular weight of 200 to 1,000, or a polyester polyol or polycarbonate polyol having a molecular weight of 500 to 1,000 is preferable, and a residue of tripropylene glycol, a polyether polyol having a molecular weight of 200 to 1,000, or a polyester polyol or polycarbonate polyol having a molecular weight of 500 to 1,000 is particularly preferable, since it becomes possible to efficiently produce a chlorine-containing polyether polyol.
The polyether polyol is not particularly limited; however, examples thereof include polypropylene glycol, polyethylene glycol, polytetramethylene glycol, and a propylene oxide-ethylene oxide copolymer.
The polyester polyol is not particularly limited; however, examples thereof include those produced by carrying out an esterification reaction between an aromatic or/and aliphatic polybasic acid, an acid anhydride, or a methyl ester, and a compound (polyvalent alcohol) having 2 or 3 hydroxyl groups according to a publicly known method, or those produced by subjecting ε-caprolactone to ring-opening polymerization with a compound (polyvalent alcohol) having 2 or 3 hydroxyl groups as an initiator.
The polycarbonate polyol is not particularly limited; however, examples thereof include those produced by reacting an alkanediol such as 1,6-hexanediol, 1,5-pentanediol, or 3-methyl-1,5-pentanediol with a carbonic acid diester

such as dimethyl carbonate or diethyl carbonate as a raw material according to a publicly known method.

A degree of unsaturation of the chlorine-containing polyether polyol is preferably 0.02 meq/g or less, and it is particularly preferably 0.01 meq/g or less since in this case the physical properties such as the hysteresis loss and the residual compressive distortion rate of the obtained polyurethane are improved.

Since the moldability is improved in a case where the chlorine-containing polyether polyol is formed into a polyurethane resin, the Mw/Mn of the chlorine-containing polyether polyol is preferably 2.00 or less and more preferably 1.80 or less (here, the number average molecular weight is denoted as Mn, and the weight average molecular weight is denoted as Mw, where these are determined from the gel permeation chromatography measurement using polystyrene as a reference substance).

The primary group conversion rate of the terminal hydroxyl group in the chlorine-containing polyether is not particularly limited; however, it is preferably less than 10% since in this case the variation in reactivity is small, the reaction is uniform, and the molecular weight distribution and composition of the polyurethane to be obtained tend to be uniform.

The number of hydroxy groups (the number of functional groups) contained per one molecule of the chlorine-containing polyether polyol is not particularly limited; however, it is preferably 2 to 8 and particularly preferably 2 to 3 since in this case polyurethane having favorable mechanical properties is obtained.

A production method for the chlorine-containing polyether polyol is not particularly limited, and the chlorine-containing polyether polyol can be produced by a production method that is publicly known in the related art. Examples thereof include a method of adding a chlorine-containing alkylene oxide to a bi- or higher functional hydroxy compound using a Lewis acid catalyst or a composite metal cyanide complex catalyst until a predetermined molecular weight is obtained, and a method of carrying out ring-opening polymerization of a chlorine-containing alkylene oxide in the presence of a bi- or higher functional hydroxy compound, an onium salt catalyst such as a phosphazenium salt, an ammonium salt, or a phosphonium salt, and a Lewis acid catalyst.

Examples of the chlorine-containing alkylene oxides include epichlorohydrin.

The polymerization temperature in a case of producing the chlorine-containing polyether polyol is not particularly limited; however, it is preferably 150°C or less, and still more preferably in a range of 70°C to 110°C since in this case the molecular weight distribution is unlikely to be widened by the decomposition of the polyalkylene oxide, and the catalytic activity is easily exhibited.

In the production method for the chlorine-containing polyether polyol, the polymerization reaction is preferably carried out without a solvent; however, the polymerization reaction can also be carried out in a solvent. Examples of the solvent to be used include benzene, toluene, xylene, cyclohexane, 1,2-dichloroethane, chlorobenzene, dichlorobenzene, 1,4-dioxane, 1,2-dimethoxyethane and the like.

<Epoxy compound>

The epoxy compound contained in the chlorine-containing polyether polyol composition according to one aspect of the present invention is not particularly limited; however, examples thereof include an epoxidized vegetable oil obtained by epoxidizing linseed oil, soybean oil, coconut oil, safflower oil, sunflower oil, cotton seed oil, sunflower oil, and the like; an epoxidized fatty acid monoester represented by an epoxidized octyl stearate; an epoxidized fatty acid diester obtained by epoxidizing a glycol ester of an unsaturated fatty acid; an alicyclic epoxide represented by an epoxidized hexahydrophthalic acid ester; an epoxidized unsaturated hydrocarbon represented by epoxidized polybutadiene; an epoxy resin represented by bisphenol A diglycidyl ether; and the like. Among these, any of an epoxidized vegetable fat oil, or bisphenol A diglycidyl ether is particularly preferable since these are versatile and handleability thereof is favorable.

The epoxy compound is not particularly limited; however, a liquid epoxy compound is preferable since in this case the stabilization action by the capture of hydrogen chloride generated by the thermal decomposition of the chlorine-containing polyether polyol proceeds efficiently and the handling is favorable.

The epoxy equivalent of the epoxy compound is not particularly limited; however, it is preferably 100 to 1,000 g/eq, and particularly preferably 150 to 800 g/eq since in this case heat stability can be efficiently imparted.

The formulation amount of the epoxy compound is 0.5 to 20 parts by weight with respect to 100 parts by weight of the chlorine-containing polyether polyol, and it is preferably 0.5 to 15 parts by weight and particularly preferably 0.5 to 10 parts by weight since more favorable flame resistance is exhibited in a case where the epoxy compound is combined with the chlorine-containing polyether polyol. There are such problems that sufficient heat stability and sufficient flame resistance are not obtained in a case where the formulation amount is too small, and the moldability during polyurethane production is impaired in a case where the formulation amount is too large.

<Aluminum compound>

The chlorine-containing polyether polyol composition according to one aspect of the present invention may

contain an aluminum compound. The aluminum compound is not particularly limited; however, examples thereof include aluminum hydroxide, aluminum oxide, aluminum silicate, polyaluminum chloride, aluminum sulfate, aluminum alcoholate and the like since in this case the mechanical properties of the polyurethane produced by carrying out a reaction with an isocyanate compound are improved. Among these, aluminum hydroxide is preferable since the mechanical properties in a case of being formed into polyurethane become favorable.
The content of the aluminum compound is not particularly limited; however, it is preferably 1 to 100 ppm, and particularly preferably 1 ppm to 50 ppm. Within this content range, mechanical properties are improved, the moldability during polyurethane production is not impaired, and physical properties are not deteriorated.

<Polyurethane>

The polyurethane according to one aspect of the present invention is a reaction product of the above-described chlorine-containing polyether polyol composition and an isocyanate compound.
The structure of the polyurethane is not particularly limited as long as the residue of the chlorine-containing polyether polyol contained in the chlorine-containing polyether polyol composition according to one aspect of the present invention is contained in the molecular structure, and it may be crosslinked, and it may be linear or branched.
In addition, the above-described polyurethane production method is not particularly limited; however, examples thereof include reacting the chlorine-containing polyether polyol composition according to one aspect of the present invention with an isocyanate compound.
Here, the isocyanate compound is not particularly limited, and examples thereof include an aromatic isocyanate compound, an aliphatic isocyanate compound, an alicyclic isocyanate compound, a polyisocyanate derivative thereof and the like.
Among these, examples of the aromatic isocyanate compound include tolylenediisocyanate (2,4- or 2,6-tolylenediisocyanate, or a mixture thereof) (TDI), phenylenediisocyanate (m- or p-phenylenediisocyanate, or a mixture thereof), 4,4'-diphenyldiisocyanate, diphenylmethanediisocyanate (4,4'-, 2,4'-, or 2,2'-diphenylmethanediisocyanate, or a mixture thereof) (MDI), 4,4'-toluidineisocyanate (TODI), 4,4'-diphenyl ether diisocyanate, xylenediisocyanate (1,3- or 1,4-xylenediisocyanate, or a mixture thereof) (XDI), tetramethylxylylene diisocyanate (1,3- or 1,4-tetramethylxylylene diisocyanate, or a mixture thereof) (TMXDI), ω,ω'-diisocyanate-1,4-diethylbenzene, naphthalenediisocyanate (1,5-, 1,4-, or 1,8-naphthalenediisocyanate, or a mixtures thereof) (NDI), triphenylmethanetriisocyanate, tris(phenyl isocyanate)thiophosphate, polymethylene polyphenylene polyisocyanate, nitrodiphenyl-4,4'-diisocyanate, 3,3'-dimethyldiphenylmethane-4,4'-diisocyanate, 4,4'-diphenylpropane diisocyanate, 3,3'-dimethoxydiphenyl-4,4'-diisocyanate and the like.
Examples of the aliphatic isocyanate compound include trimethylenediisocyanate, 1,2-propylenediisocyanate, butylenediisocyanate (tetramethylenediisocyanate, 1,2-butylenediisocyanate, 2,3-butylenediisocyanate, 1,3-butylenediisocyanate), hexamethylenediisocyanate, pentamethylenediisocyanate, 2,2,4-trimethylhexamethylenediisocyanate, 2,4,4-trimethylhexamethylenediisocyanate, methyl 2,6-diisocyanatocaproate, lysine diisocyanate, lysine ester triisocyanate, 1,6,11-undecanetriisocyanate, 1,3,6-hexamethylenetriisocyanate, trimethylhexamethylenediisocyanate, decamethylenediisocyanate and the like.
Examples of the monocyclic alicyclic isocyanate compound include 1,3-cyclopentanediisocyanate, 1,3-cyclopentenediisocyanate, cyclohexanediisocyanate (1,4-cyclohexanediisocyanate, 1,3-cyclohexane diisocyanate), 3-isocyanatomethyl-3,5,5-trimethylcyclohexylisocyanate (isophorone diisocyanate, IPDI), methylenebis(cyclohexylisocyanate (4,4'-, 2,4'-, or 2,2'-methylenebis(cyclohexylisocyanate), or a mixture thereof) (hydrogenated MDI), methylcyclohexane diisocyanate (methyl-2,4-cyclohexane diisocyanate, methyl-2,6-cyclohexane diisocyanate, bis(methyl isocyanate)cyclohexane (1,3- or 1,4-bis(methyl isocyanate)cyclohexane, or a mixture thereof) (hydrogenated XDI), diisocyanate dimerate, transcyclohexane 1,4-diisocyanate, hydrogenated tolylene diisocyanate (hydrogenated TDI), hydrogenated tetramethylxylylene diisocyanate (hydrogenated TMXDI) and the like.
Examples of the bridged ring-type isocyanate compound include norbornene diisocyanate, methyl norbornane diisocyanate, bicycloheptane triisocyanate, methyl bicycloheptane cyanate, di(diisocyanatomethyl)tricyclodecane and the like.
In addition, the derivatives of these isocyanates include a multimer (a dimer, a trimer, a pentamer, a heptamer, a uretidine dione, a urethane imine, an isocyanurate-modified product, a polycarbodiimide, or the like) of the isocyanate compound, a urethane-modified product (for example, a urethane-modified product, in which some of the isocyanate groups in the above-described isocyanate compound or multimer are modified or reacted with a monool or polyol, etc.), a biuret-modified product (for example, a biuret-modified product that is generated by a reaction of the above-described isocyanate compound with water, etc.), an allophanate-modified product (for example, an allophanate-modified product that is generated by a reaction of the above-described isocyanate compound with a monool or polyol component, etc.), a urea-modified product (for example, a urea-modified product that is generated by a reaction of the above-described isocyanate compound with diamine, etc.), an oxadiazine trione (for example, oxadiazine trione that is generated by a reaction of the isocyanate compound with carbon dioxide gas or the like, etc.) and the like.

The above-described isocyanate compounds or derivatives thereof may be used alone, or two or kinds thereof may be used.

In a case where a chlorine-containing polyether polyol is reacted with a polyisocyanate compound to obtain polyurethane, the reaction of the chlorine-containing polyether polyol with the isocyanate compound is accelerated, for example, in a case of heating the composition in terms of an upper limit of the heating temperature of 200°C or adding a catalyst such as dioctyl tin dilaurate, dibutyl tin dilaurate, triethylamine, triethylenediamine, stannous octoate, dibutyl tin di-2-ethylhexanoate, sodium o-phenylphenate, potassium oleate, tetra(2-ethylhexyl)titanate, stannic chloride, ferric chloride, or antimony trichloride, whereby the polyurethane can be obtained in a short time.

In producing the polyurethane according to one aspect of the present invention, another polyol, a stabilizer, an antioxidant, a foam stabilizer, a crosslinking agent, a foaming agent, a connecting agent, and the like, which are publicly known, may be incorporated as necessary into the chlorine-containing polyether polyol according to one aspect of the present invention.

The polyurethane according to one aspect of the present invention can be used for a use application of urethane foam, such as a rigid foam or a soft foam. In addition, it can be used for coating agents and paints (coatings), pressure sensitive adhesives and adhesives (adhesives), sealing materials (sealants), thermoplastic or thermosetting elastomers (elastomers) and the like, leather, spandex, various inks, and the like.

Although the polyurethane-based foams are roughly divided into a soft foam and a rigid foam, a manufacturing method publicly known in the related art can be applied to any of the soft and rigid foams in a case where it is intended to obtain polyurethane foam using the chlorine-containing polyether polyol according to one aspect of the present invention.

Examples thereof include a method of stirring and mixing a mixed liquid in a state of being liquid at room temperature, in which another polyol, a stabilizer, an antioxidant, a catalyst, a foam stabilizer, a crosslinking agent, a foaming agent, a connecting agent, and the like, which are publicly known, has been blended as necessary with the chlorine-containing polyether polyol according to one aspect of the present invention, and then stirring and mixing the mixed liquid with a polyisocyanate compound, followed by being injected into a suitable mold and foamed and cured.

In addition, examples thereof include a method of mixing another polyol, a catalyst, a foam stabilizer, a foaming agent, and a polyisocyanate compound, which are publicly known, with the chlorine-containing polyether polyol according to one aspect of the present invention by using a publicly known stirring and mixing machine to prepare an effervescent mixture, and injecting the resultant mixture into a mold in a state where the top surface is open, thereby being subjected to free foaming and curing and molding as a slab.

A foaming expansion ratio of the polyurethane foam is not particularly limited; however, it is preferably 1.2 times or more and 100 times or less, and particularly preferably 10 times or more and 80 times or less since handleability becomes favorable.

Any special limitations are not imposed on the use applications of the polyurethane foam to be utilized, and the polyurethane foam can be used in use applications to which a soft polyurethane foam is applied, such as a ceiling material or sheet for an automobile and a vehicle, a pillow, furniture and interiors, bedding, a shoe sole, a sponge, various cushions, a tennis ball, a landing mat and the like, in terms of the characteristics of the polyurethane foam consisting of a reaction product of the composition according to one aspect of the present invention. In addition, the polyurethane foam according to one aspect of the present invention can be used in use applications to which a rigid polyurethane foam is applied, such as a thermal insulation and cold reserving material, a vibration-proof and sound absorbing material, a cushioning material, buoyant material and the like. Examples thereof include use applications for marine vessels as a heat insulating material for a fishing boat, a large ship, a refrigerated cargo carrier, an LNG carrier, a liquefied gas carrier, or a container, a core material for an FRP boat, and a buoyant material for a large ship, a lifeboat, a buoy, or floats, use applications for vehicles as a heat insulating material for a container for a refrigerator vehicle, a refrigerator truck, or railway, or a tank truck, and a heat insulating material for a ceiling of a vehicle or a truck, use applications for plants as a heat insulating material for a tank or a pipe in chemical industry equipment, a heat reserving material for a heavy oil tank, a pipe, or the like, a heat insulating material for cooling or piping for low temperature liquefied gas of LPG or LNG, a thermal insulation cover, and a tank lid, and use applications for a heat insulating material for a refrigerator or a refrigerating machine, a thermal insulation member for an air conditioner, and heat insulating material for various insulation instruments such as a showcase, a stocker, a vending machine, a hot water heater, a hot water tank and the like, as well as use applications for architecture or building materials as a heat insulating material for residential and office buildings (for a wall, underfloor, a ceiling, underroof, or the like), a thermal insulation building material (a laminate board, a composite panel, a siding material, or the like), a heat insulating material for a bath (stainless steel, FRP, or enamel), a heat insulating material for a freezing storage warehouse, a cold storage warehouse, an agricultural warehouse, a barn or the like, void filling (thermal insulation sash), and a heat insulating material for a thermostatic chamber or local central heating and cooling, use applications for civil engineering as a heat insulating material and an anti-vibration material for a road floor, and as other use applications, a chair core material, a door panel, a decorative craft, an entertainment instrument (a cooler box or a water bottle), an educational material (a three-dimensional map or the

like), molds and jigs, surfing core materials, RIM type products (a ski core material, a racket core material, housings, and the like), a packing material and the like.

In addition, in terms of the characteristics of the polyurethane according to one aspect of the present invention, it can be used as an adhesive, for example, for laminate bonding for a flexible packaging material, that is, for adhesion in a laminated bag for snacks, boiling, or retort foods, or a laminated bag for non-food laminated bags such as a detergent, for adhesion in wrapping, underfloor heating floor, or flooring in the architecture field, and for adhesion in a back sheet of a solar cell, an LCD television, and other members associated with a battery in the field of electronics.

In addition, in terms of the characteristics of the polyurethane according to one aspect of the present invention, it can be used, in the use application of a sealing material, for architectural exterior, for example, sealing of an ALC panel or a sash and sealing for RC wall jointing, a framework under tiles, or a window frame, and for architectural interior, sealing for a wet area and a gypsum board, as well as sealing for an architecture and building material represented by a water-proof substrate or a roof, and sealing of a special vehicle such as a refrigerator truck and an automobile window frame, and furthermore, a gasket in electrical and electronic apparatuses, a communication apparatus, and particularly a hard disk device.

Further, in terms of the characteristics of the polyurethane according to one aspect of the present invention, it can be used, regarding the use application of an elastomer, as a thermoplastic elastomer, for hoses such as a high pressure hose, a fire hose, a pesticide hose, and paint hose, tubes such as a pneumatic tube, a hydraulic tubes, a fuel tube, a dialysis tube, an arterial, venous, or cardiac tube, an anti-scratch film or sheet for an automobile, an anti-scratch film for an instrument panel skin material sofa, an air mat, a nursing bed sheet, a diaphragm, a keyboard sheet, a rubber screen, a conveyor belt, a gasket, a synthetic leather, a stretchable sheet, a flexible film, tarpaulin, clothes, a life jacket, a wet suit, hot melt, a diaper article, a packing cushioning film, film and sheets such as medical surgical films, industrial parts such as various gears, various grips, a solid tire, a caster, a roller, a vibration-proof or sound-proof part, a picker, a bushing, a shaft bearing, a slip prevention clasp, a building material, a packing, a cap, a watch belt, a connector, a rubber screen, a print drum, a grease cover, a hammer, a dust cover, a sieve part, and a ball joint, automobile parts such as instrument panel skin, gear knob skin, console box skin, a leather seat, a bumper or side molding, a tail lamp seal, a snow chain, a bushing, a dust cover, a gear, a shaft bearing, a cap, a ball joint, a pedal stopper, a door lock striker, a spring cover, and a vibration-proof part, belts such as a conveyor belt, a timing belt, a round belt, a V belt, and a flat belt, and electric cables such as an electric power or communication cable, an automobile ABS sensor cable, a robotic cable, an industrial cable, and a computer wiring line, and as other use applications, in a wide range of us applications such as ports shoes, climbing shoes, ski shoes, a ski board, a snow board, motocross boots, safety shoes, high-heeled shoes, a snorkel, a swim fin, a golf ball cover, an anti-slip article for stairs, a road pole cone, a roller skate wheel, various tags, a sailboard article, a ski part, various ropes, a binder, a medical dressing material, a catheter, a medical rope, and an adhesive plaster. In addition, it can be used, as a thermosetting elastomer, for rolls such as those for papermaking, an iron plate rolling roll, printing, a roll for a small article for a business machine, a platen roll, and a skate roller, wheels such as a solid tire, a caster, a battery forklift, a wheel for a work and transport vehicle (a pallet jack or the like), and an industrial truck wheel, belts such as those for a conveyor belt idler, a guide roll of a cable or belt, a prairie spring, a belt cushioning material, and an oil seal, OA equipment such as an electronics equipment part and a cleaning grade for a copying machine, and materials for secondary processing such as those for a round bar, a pipe, a prismatic column, a plate, and a sheet, and it can be used, as other use applications, in a wide range of use applications such as various gears, a connection ring liner, pump lining, an impeller cyclone cone, a cyclone liner, and a polishing pad.

[Examples]

Hereinafter, the present invention will be described with reference to Examples; however, the present examples are not intended to limit the present invention in any way. First, descriptions will be made for the details of the raw materials that are used in the production of the chlorine-containing polyether polyol, and the analysis method and the production method for the chlorine-containing polyether polyol.

(Analysis method for chlorine-containing polyether polyol)

(1) Molecular weight of chlorine-containing polyether polyol (unit: g/mol)

A hydroxyl group value d (unit: mgKOH/g) of the chlorine-containing polyether polyol was measured according to the method described in JISK-1557. The number of functional groups of the chlorine-containing polyether polyol obtained was denoted as e, and the molecular weight of the chlorine-containing polyether polyol was calculated according to the following expression.

$$\text{Molecular weight} = (56{,}100/d) \times e$$

(2) Molecular weight distribution of chlorine-containing polyether polyol (unit: absent)

Using a gel permeation chromatograph (GPC) (manufactured by Tosoh Corporation, HLC8020), the measurement was carried out at 40°C using tetrahydrofuran as a solvent, and polystyrene was used as the reference substance to obtain the number average molecular weight (Mn) and the weight average molecular weight (Mw) of the chlorine-containing polyether polyol.

The molecular weight distribution (Mw/Mn) of the chlorine-containing polyether polyol was calculated from the Mn and Mw calculated by the above method.

(3) Degree of unsaturation of chlorine-containing polyether polyol (unit: meq/g)

The degree of unsaturation of the chlorine-containing polyether polyol was calculated according to the method described in JISK-1557.

(4) Aluminum concentration in chlorine-containing polyether polyol composition (unit: ppm)

The chlorine-containing polyether polyol composition was subject to ashing and then subjected to dissolution in an acid to obtain a solution, which was subsequently measured using ICP-AES Optima 8300 (manufactured by PerkinElmer, Inc.).

(5) Heat stability: Acid value increase (unit: ΔmgKOH/g)

A heat stability test was carried out by holding the chlorine-containing polyether polyol composition in a gear oven raised to 150°C for 30 hours, and the acid value before and after the test was calculated according to the method described in JISK-1557.

Oxidation rise was calculated by subtracting the acid value before the heat stability test from the acid value after the heat stability test calculated by the above method.

A (passed): Less than 0.1 mgKOH/g
B (passed): 0.1 mgKOH/g or more and less than 0.5 mgKOH/g
C (not passed): 0.5 mgKOH/g or more

(6) Heat stability: Viscosity retention rate (unit: %)

A heat stability test was carried out by holding the chlorine-containing polyether polyol composition in a gear oven raised to 150°C for 30 hours, and the viscosity before and after the test was measured using a B-type viscometer.

The viscosity retention rate was calculated according to the following expression using the viscosity value measured by the above method.

Viscosity after heat stability test / viscosity before heat stability test × 100

A (passed): 95% or more
B (passed): 90% or more and less than 95%
C (not passed): Less than 90%

(7) Heat stability: Appearance (unit: absent)

A heat stability test was carried out by holding the chlorine-containing polyether polyol composition in a gear oven raised to 150°C for 30 hours, and the color after the test was visually observed.

A (passed): Light yellow
B (passed): Dark yellow
C (not passed): Brown to black

Example 1.

283.2 g of polypropylene glycol (manufactured by Stirring blade, product name: SANNIX PP-400) having a molecular weight of 400 and 3.42 g of tetrabutylammonium bromide (manufactured by FUJIFILM Wako Pure Chemical Corporation) were added to a 2-liter four-neck flask equipped with a stirring blade. After making the inside of the flask into a nitrogen atmosphere, the internal temperature thereof was set to 100°C, and a dehydration treatment was carried out for 2 hours under a reduced pressure of 0.5 kPa. Thereafter, 6.51 g of aluminum triisopropoxide (PADM, manufactured by Kawaken Fine Chemicals Co., Ltd.) was added thereto, the internal temperature thereof was set to 100°C, and a decompression treatment at 0.5 kPa was carried out for 2 hours to obtain an initiator composition. The obtained initiator composition was raised to 98°C, and 960 mL of epichlorohydrin (ECH, manufactured by FUJIFILM Wako Pure Chemical Corporation) was continuously supplied over a period of 4 hours. After supplying epichlorohydrin, aging was carried out for 2 hours at an internal temperature in a range of 90°C to 100°C, and then the residual epichlorohydrin was removed under a reduced pressure of 0.5 kPa at 100°C to obtain 1,415 g of a crude chlorine-containing polyol. Thereafter, the temperature was decreased to 80°C, and 42.5 g of EPOMIK R-140 (a liquid epoxy compound, manufactured by Mitsui Chemicals, Inc., epoxy equivalent: 188 g/eq) was added as bisphenol A diglycidyl ether to obtain a light yellow crude chlorine-containing polyether polyol composition [A-1]. The obtained crude chlorine-containing polyether polyol [A-1] had a molecular weight of 2,010 g/mol, a degree of unsaturation of 0.0045 meq/g, an Mw/Mn of 1.55, and a primary group conversion rate of 4%. Aluminum alcoholate bonded to the crude chlorine-containing polyether polyol composition [A-1] remained, and the aluminum concentration was 602 ppm. In addition, as a result of carrying out the evaluation according to the method of the heat stability test described above, the chlorine-containing polyether polyol composition was such that the appearance color was dark yellow, the increase in acid value and the decrease in viscosity were small, and heat stability was excellent.

Example 2.

With respect to 100 parts by weight of the crude chlorine-containing polyether polyol composition [A-1] obtained in Example 1, diatomaceous earth corresponding to 1 part by weight (manufactured by Showa Chemical Industry Co., Ltd., Radiolite #3000), and water corresponding to 5 parts by weight (ion exchange water) were stirred for 2 hours at 80°C.

Thereafter, dehydration was started while raising the temperature and carrying out decompression, and finally, the decompression and dehydration operation was carried out for 3 hours under the conditions of 100°C and 0.2 kPa. Then, using a stainless steel holder KST-142 attached with a tank, manufactured by Advantec Toyo Kaisha, Ltd., pressure filtration was carried out at 90°C and 0.3 MPa (filter material: stainless steel mesh, 120 meshes) to obtain a light yellow chlorine-containing polyether polyol composition [A-2]. The obtained chlorine-containing polyether polyol composition [A-2] contained aluminum hydroxide, and the aluminum concentration was 6 ppm. In addition, as a result of carrying out the evaluation according to the method of the heat stability test described above, the chlorine-containing polyether polyol composition was such that the appearance color was light yellow, the increase in acid value and the decrease in viscosity were small, and heat stability was excellent.

Example 3.

With respect to 100 parts by weight of the crude chlorine-containing polyether polyol composition [A-1] obtained in Example 1, diatomaceous earth corresponding to 1 part by weight (manufactured by Showa Chemical Industry Co., Ltd., Radiolite #3000), and water corresponding to 5 parts by weight (ion exchange water) were added and stirred for 2 hours at 80°C.

Thereafter, dehydration was started while raising the temperature and carrying out decompression, and finally, the decompression and dehydration operation was carried out for 3 hours under the conditions of 100°C and 0.2 kPa. Then, using a stainless steel holder KST-142 attached with a tank, manufactured by Advantec Toyo Kaisha, Ltd., pressure filtration was carried out twice at 90°C and 0.3 MPa (filter material: quantitative filter paper No. 5A, manufactured by Advantec Toyo Kaisha, Ltd.) to obtain a light yellow chlorine-containing polyether polyol composition [A-3]. The aluminum concentration in the obtained chlorine-containing polyether polyol composition [A-3] was less than 1 ppm. In addition, as a result of carrying out the evaluation according to the method of the heat stability test described above, the chlorine-containing polyether polyol composition was such that the appearance color was light yellow, the increase in acid value and the decrease in viscosity were small, and heat stability was excellent.

Example 4.

283.2 g of polypropylene glycol (manufactured by Stirring blade, product name: SANNIX PP-400) having a molecular weight of 400 and 3.42 g of tetrabutylammonium bromide (manufactured by FUJIFILM Wako Pure Chemical

Corporation) were added to a 2-liter four-neck flask equipped with a stirring blade. After making the inside of the flask into a nitrogen atmosphere, the internal temperature thereof was set to 100°C, and a dehydration treatment was carried out for 2 hours under a reduced pressure of 0.5 kPa. Thereafter, 6.51 g of aluminum triisopropoxide (PADM, manufactured by Kawaken Fine Chemicals Co., Ltd.) was added thereto, the internal temperature thereof was set to 100°C, and a decompression treatment at 0.5 kPa was carried out for 2 hours to obtain an initiator composition. The obtained initiator composition was raised to 98°C, and 960 mL of epichlorohydrin (ECH, manufactured by FUJIFILM Wako Pure Chemical Corporation) was continuously supplied over a period of 4 hours. After supplying epichlorohydrin, aging was carried out for 2 hours at an internal temperature in a range of 90°C to 100°C, and then the residual epichlorohydrin was removed under a reduced pressure of 0.5 kPa at 100°C to obtain 1,415 g of a crude chlorine-containing polyol. Thereafter, the temperature was decreased to 80°C, and 42.5 g of EPICLON 4050 (manufactured by DIC Corporation, a solid epoxy compound, epoxy equivalent: 920 g/eq) was added to obtain a light yellow crude chlorine-containing polyether polyol composition. The obtained crude chlorine-containing polyether polyol had a molecular weight of 1,980 g/mol, a degree of unsaturation of 0.0044 meq/g, an Mw/Mn of 1.62, and a primary group conversion rate of 3%.

With respect to 100 parts by weight of the obtained crude chlorine-containing polyether polyol composition, diatomaceous earth corresponding to 1 part by weight (manufactured by Showa Chemical Industry Co., Ltd., Radiolite #3000), and water corresponding to 5 parts by weight (ion exchange water) were added and stirred for 2 hours at 80°C.

Thereafter, dehydration was started while raising the temperature and carrying out decompression, and finally, the decompression and dehydration operation was carried out for 3 hours under the conditions of 100°C and 0.2 kPa. Then, using a stainless steel holder KST-142 attached with a tank, manufactured by Advantec Toyo Kaisha, Ltd., pressure filtration was carried out at 90°C and 0.3 MPa (filter material: stainless steel mesh, 120 meshes) to obtain a light yellow chlorine-containing polyether polyol composition [A-4]. The obtained chlorine-containing polyether polyol composition [A-4] contained aluminum hydroxide, and the aluminum concentration was 7 ppm. In addition, as a result of carrying out the evaluation according to the method of the heat stability test described above, the chlorine-containing polyether polyol composition was such that the appearance color was dark yellow, the increase in acid value and the decrease in viscosity were small, and heat stability was excellent.

Example 5.

849.6 g of a polycarbonate diol (manufactured by Tosoh Corporation, product name: NIPPOLLAN-965) having a molecular weight of 1,000, and 6.85 g of tetrabutylammonium bromide (manufactured by FUJIFILM Wako Pure Chemical Corporation) were added to a 2-liter four-neck flask equipped with a stirring blade. After making the inside of the flask into a nitrogen atmosphere, the internal temperature thereof was set to 100°C, and a dehydration treatment was carried out for 2 hours under a reduced pressure of 0.5 kPa. Thereafter, 13.02 g of aluminum triisopropoxide (PADM, manufactured by Kawaken Fine Chemicals Co., Ltd.) was added thereto, the internal temperature thereof was set to 100°C, and a decompression treatment at 0.5 kPa was carried out for 2 hours to obtain an initiator composition. The obtained initiator composition was raised to 98°C, and 720 mL of epichlorohydrin (ECH, manufactured by FUJIFILM Wako Pure Chemical Corporation) was continuously supplied over a period of 4 hours. After supplying epichlorohydrin, aging was carried out for 2 hours at an internal temperature in a range of 90°C to 100°C, and then the residual epichlorohydrin was removed under a reduced pressure of 0.5 kPa at 100°C to obtain 1,700 g of a crude chlorine-containing polyol. Thereafter, the temperature was decreased to 80°C, and 51.2 g of EPOMIK R-140 (manufactured by Mitsui Chemicals, Inc., a liquid epoxy compound, epoxy equivalent: 188 g/eq) was added to obtain a light yellow crude chlorine-containing polyether polyol composition. The obtained crude chlorine-containing polyether polyol had a molecular weight of 2,000 g/mol, a degree of unsaturation of 0.0052 meq/g, an Mw/Mn of 1.88, and a primary group conversion rate of 6%.

With respect to 100 parts by weight of the obtained crude chlorine-containing polyether polyol composition, diatomaceous earth corresponding to 1 part by weight (manufactured by Showa Chemical Industry Co., Ltd., Radiolite #3000), and water corresponding to 5 parts by weight (ion exchange water) were added and stirred for 2 hours at 80°C.

Thereafter, dehydration was started while raising the temperature and carrying out decompression, and finally, the decompression and dehydration operation was carried out for 3 hours under the conditions of 100°C and 0.2 kPa. Then, using a stainless steel holder KST-142 attached with a tank, manufactured by Advantec Toyo Kaisha, Ltd., pressure filtration was carried out at 90°C and 0.3 MPa (filter material: stainless steel mesh, 120 meshes) to obtain a light yellow chlorine-containing polyether polyol composition [A-5]. The obtained chlorine-containing polyether polyol composition [A-5] contained aluminum hydroxide, and the aluminum concentration was 8 ppm. In addition, as a result of carrying out the evaluation according to the method of the heat stability test described above, the chlorine-containing polyether polyol composition was such that the appearance color was light yellow, the increase in acid value and the decrease in viscosity were small, and heat stability was excellent.

Example 6.

849.6 g of a polycarbonate diol (manufactured by Tosoh Corporation, product name: NIPPOLLAN-965) having a molecular weight of 1,000, and 6.85 g of tetrabutylammonium bromide (manufactured by FUJIFILM Wako Pure Chemical Corporation) were added to a 2-liter four-neck flask equipped with a stirring blade. After making the inside of the flask into a nitrogen atmosphere, the internal temperature thereof was set to 100°C, and a dehydration treatment was carried out for 2 hours under a reduced pressure of 0.5 kPa. Thereafter, 13.02 g of aluminum triisopropoxide (PADM, manufactured by Kawaken Fine Chemicals Co., Ltd.) was added thereto, the internal temperature thereof was set to 100°C, and a decompression treatment at 0.5 kPa was carried out for 2 hours to obtain an initiator composition. The obtained initiator composition was raised to 98°C, and 720 mL of epichlorohydrin (ECH, manufactured by FUJIFILM Wako Pure Chemical Corporation) was continuously supplied over a period of 4 hours. After supplying epichlorohydrin, aging was carried out for 2 hours at an internal temperature in a range of 90°C to 100°C, and then the residual epichlorohydrin was removed under a reduced pressure of 0.5 kPa at 100°C to obtain 1,698 g of a crude chlorine-containing polyol. Thereafter, the temperature was decreased to 80°C, and 271.9 g of EPOMIK R-140 (manufactured by Mitsui Chemicals, Inc., a liquid epoxy compound, epoxy equivalent: 188 g/eq) was added to obtain a light yellow crude chlorine-containing polyether polyol composition. The obtained crude chlorine-containing polyether polyol had a molecular weight of 2,000 g/mol, a degree of unsaturation of 0.0052 meq/g, an Mw/Mn of 1.88, and a primary group conversion rate of 6%.
With respect to 100 parts by weight of the obtained crude chlorine-containing polyether polyol composition, diatomaceous earth corresponding to 0.4 parts by weight (manufactured by Showa Chemical Industry Co., Ltd., Radiolite #3000), and water corresponding to 5 parts by weight (ion exchange water) were added and stirred for 2 hours at 80°C.
Thereafter, dehydration was started while raising the temperature and carrying out decompression, and finally, the decompression and dehydration operation was carried out for 3 hours under the conditions of 100°C and 0.2 kPa. Then, using a stainless steel holder KST-142 attached with a tank, manufactured by Advantec Toyo Kaisha, Ltd., pressure filtration was carried out at 90°C and 0.3 MPa (filter material: stainless steel mesh, 120 meshes) to obtain a light yellow chlorine-containing polyether polyol composition [A-6]. The obtained chlorine-containing polyether polyol composition [A-6] contained aluminum hydroxide, and the aluminum concentration was 83 ppm. In addition, as a result of carrying out the evaluation according to the method of the heat stability test described above, the chlorine-containing polyether polyol composition was such that the appearance color was light yellow, the increase in acid value and the decrease in viscosity were small, and heat stability was excellent.

Example 7.

590 g of a polyester polyol (manufactured by KURARAY Co., Ltd., product name: KURARAY POLYOL P-1010) having a molecular weight of 1,000, and 8.07 g of tetrabutylammonium bromide (manufactured by FUJIFILM Wako Pure Chemical Corporation) were added to a 2-liter four-neck flask equipped with a stirring blade. After making the inside of the flask into a nitrogen atmosphere, the internal temperature thereof was set to 100°C, and a dehydration treatment was carried out for 2 hours under a reduced pressure of 0.5 kPa. Thereafter, 9.04 g of aluminum triisopropoxide (PADM, manufactured by Kawaken Fine Chemicals Co., Ltd.) was added thereto, the internal temperature thereof was set to 100°C, and a decompression treatment at 0.5 kPa was carried out for 2 hours to obtain an initiator composition. The obtained initiator composition was raised to 98°C, and 500 mL of epichlorohydrin (ECH, manufactured by FUJIFILM Wako Pure Chemical Corporation) was continuously supplied over a period of 4 hours. After supplying epichlorohydrin, aging was carried out for 2 hours at an internal temperature in a range of 90°C to 100°C, and then the residual epichlorohydrin was removed under a reduced pressure of 0.5 kPa at 100°C to obtain 1,698 g of a crude chlorine-containing polyol. Thereafter, the temperature was decreased to 80°C, and 62.11 g of ADEKA CIZER O-130P (manufactured by ADEKA Corporation, a liquid epoxy compound, epoxy equivalent: 184 g/eq) was added as epoxidized vegetable fat oil to obtain a light yellow crude chlorine-containing polyether polyol composition. The obtained crude chlorine-containing polyether polyol had a molecular weight of 2,000 g/mol, a degree of unsaturation of 0.0420 meq/g, an Mw/Mn of 1.79, and a primary group conversion rate of 4%.
With respect to 100 parts by weight of the obtained crude chlorine-containing polyether polyol composition, diatomaceous earth corresponding to 0.4 parts by weight (manufactured by Showa Chemical Industry Co., Ltd., Radiolite #3000), and water corresponding to 5 parts by weight (ion exchange water) were added and stirred for 2 hours at 80°C.
Thereafter, dehydration was started while raising the temperature and carrying out decompression, and finally, the decompression and dehydration operation was carried out for 3 hours under the conditions of 100°C and 0.2 kPa. Then, using a stainless steel holder KST-142 attached with a tank, manufactured by Advantec Toyo Kaisha, Ltd., pressure filtration was carried out at 90°C and 0.3 MPa (filter material: stainless steel mesh, 120 meshes) to obtain a light yellow chlorine-containing polyether polyol composition [A-7]. The obtained chlorine-containing polyether polyol composition [A-7] contained aluminum hydroxide, and the aluminum concentration was 7 ppm. In addition, as a result of carrying out the evaluation according to the method of the heat stability test described above, the chlorine-containing polyether polyol

composition was such that the appearance color was light yellow, the increase in acid value and the decrease in viscosity were small, and heat stability was excellent.

Comparative Example 1.

The same operation was carried out to obtain a crude chlorine-containing polyol, except that in Example 1, 424.8 g of EPOMIK R-140 (a liquid epoxy compound) was used.

With respect to 100 parts by weight of the obtained crude chlorine-containing polyether polyol, diatomaceous earth corresponding to 1 part by weight (manufactured by Showa Chemical Industry Co., Ltd., Radiolite #3000), and water corresponding to 5 parts by weight (ion exchange water) were added and stirred for 2 hours at 80°C.

Thereafter, dehydration was started while raising the temperature and carrying out decompression, and finally, the decompression and dehydration operation was carried out for 3 hours under the conditions of 100°C and 0.2 kPa. Then, using a stainless steel holder KST-142 attached with a tank, manufactured by Advantec Toyo Kaisha, Ltd., pressure filtration was carried out at 90°C and 0.3 MPa (filter material: stainless steel mesh, 120 meshes) to obtain a light yellow chlorine-containing polyether polyol composition [B-1]. The obtained chlorine-containing polyether polyol composition [B-1] contained aluminum hydroxide, and the aluminum concentration was 3 ppm. In addition, as a result of carrying out the evaluation according to the method of the heat stability test described above, the chlorine-containing polyether polyol composition was such that the appearance color was light yellow, the increase in acid value and the decrease in viscosity were small, and heat stability was excellent.

Comparative Example 2.

The same operation was carried out to obtain a crude chlorine-containing polyol, except that in Example 1, EPOMIK R-140 was not added.

With respect to 100 parts by weight of the obtained crude chlorine-containing polyether polyol, diatomaceous earth corresponding to 1 part by weight (manufactured by Showa Chemical Industry Co., Ltd., Radiolite #3000), and water corresponding to 5 parts by weight (ion exchange water) were added and stirred for 2 hours at 80°C.

Thereafter, dehydration was started while raising the temperature and carrying out decompression, and finally, the decompression and dehydration operation was carried out for 3 hours under the conditions of 100°C and 0.2 kPa. Then, using a stainless steel holder KST-142 attached with a tank, manufactured by Advantec Toyo Kaisha, Ltd., pressure filtration was carried out at 90°C and 0.3 MPa (filter material: stainless steel mesh, 120 meshes) to obtain a light yellow chlorine-containing polyether polyol composition [B-2]. The obtained chlorine-containing polyether polyol composition [B-2] contained aluminum hydroxide, and the aluminum concentration was 12 ppm. In addition, as a result of carrying out the evaluation according to the method of the heat stability test described above, the chlorine-containing polyether polyol composition was such that the appearance color was brown, the increase in acid value and the decrease in viscosity were large, and heat stability was inferior.

The results of Examples 1 to 7 and Comparative Examples 1 to 2 are shown together in Table 1 and Table 2.

[Table 1]

| Example | | Example1 | Example2 | Examples | Example4 | Example5 | Example6 | Example7 |
|---|---|---|---|---|---|---|---|---|
| | | A-1 | A-2 | A-3 | A-4 | A-5 | A-6 | A-7 |
| Active hydrogen compound residue ($R^1$) | | Bifunctional PPG having molecular weight of 400 (PP-400) | Bifunctional PPG having molecular weight of 400 (PP-400) | Bifunctional PPG having molecular weight of 400 (PP-400) | Bifunctional PPG having molecular weight of 400 (PP-400) | PCD having molecular weight of 1,000 (N-965) | PCD having molecular weight of 1,000 (N-965) | PES having molecular weight of 1,000 (P-1010) |
| Number of functional groups (m) | | 2 | 2 | 2 | 2 | 2 | 2 | 2 |
| Degree of unsaturation (meq/g) | | 0.0045 | 0.0045 | 0.0045 | 0.0044 | 0.0052 | 0.0052 | 0.0420 |
| Molecular weight (g/mol) | | 2010 | 2010 | 2010 | 1980 | 2000 | 2000 | 2000 |
| Mw/Mn (-) | | 1.55 | 1.55 | 1.55 | 1.62 | 1.88 | 1.88 | 1.79 |
| Primary group conversion rate (%) | | 4 | 4 | 4 | 3 | 6 | 6 | 4 |
| Epoxy compound | Kind | EPOMIK R-140 (Liquid epoxy compound) | EPOMIK R-140 (Liquid epoxy compound) | EPOMIK R-140 (Liquid epoxy compound) | EPICLON 4050 (Solid epoxy compound) | EPOMIK R-140 (Liquid epoxy compound) | EPOMIK R-140 (Liquid epoxy compound) | ADEKACIZER O-130P (Liquid epoxy compound) |
| | Epoxy equivalent g/eq | 188 | 188 | 188 | 920 | 188 | 188 | 184 |
| | Concentration parts by weight | 3 | 3 | 3 | 3 | 3 | 16 | 5 |
| Aluminum concentration | Kind | Aluminum alcoholate | Aluminum hydroxide | - | Aluminum hydroxide | Aluminum hydroxide | Aluminum hydroxide | Aluminum hydroxide |
| | Aluminum concentration ppm | 602 | 6 | <1 | 7 | 8 | 83 | 7 |

(continued)

| Example | | Example1 | Example2 | Examples | Example4 | Example5 | Example6 | Example7 |
|---|---|---|---|---|---|---|---|---|
| | | A-1 | A-2 | A-3 | A-4 | A-5 | A-6 | A-7 |
| Heat stability test | Increase in acid value ΔmgKOH/g | 0.08<br>A | 0.05<br>A | 0.09<br>A | 0.23<br>B | 0.05<br>A | 0.02<br>A | 0.06<br>A |
| | Viscosity retention rate % | 102<br>A | 97<br>A | 96<br>A | 97<br>A | 96<br>A | 98<br>A | 95<br>A |
| | Appearance | Dark yellow<br>B | Light yellow<br>A | Light yellow<br>A | Dark yellow<br>B | Light yellow<br>A | Light yellow<br>A | Light yellow<br>A |

[Table 2]

| Comparative Example | | Comparative Example1 | Comparative Example2 |
|---|---|---|---|
| | | B-1 | B-2 |
| Active hydrogen compound residue ($R^1$) | | Bifunctional PPG having molecular weight of 400 (PP-400) | Bifunctional PPG having molecular weight of 400 (PP-400) |
| Number of functional groups (m) | | 2 | 2 |
| Degree of unsaturation (meq/g) | | 0.0045 | 0.0045 |
| Molecular weight (g/mol) | | 2010 | 2010 |
| Mw/Mn (-) | | 1.55 | 1.55 |
| Primary group conversion rate (%) | | 4 | 4 |
| Epoxy compound | Kind | EPOMIK R-140 (Liquid epoxy compound) | - |
| | Epoxy equivalent g/eq | 188 | - |
| | Concentration parts by weight | 30 | - |
| Aluminum concentration | Kind | Aluminum hydroxide | Aluminum hydroxide |
| | Aluminum concentration ppm | 3 | 12 |
| Heat stability test | Increase in acid value ΔmgKOH/g | 0.02<br>A | 0.9<br>C |
| | Viscosity retention rate % | 105<br>A | 82<br>C |
| | Appearance | Light yellow<br>A | Brown<br>C |

Hereinafter, descriptions will be made for an evaluation method and production of polyurethane, which is a reaction product of the chlorine-containing polyether polyol composition according to the present invention and an isocyanate compound.

(Production method for polyurethane)

(1) Raw material

«Commercially available PPG»

In any of Examples and Comparative Examples, SANNIX GP-3000 manufactured by Sanyo Chemical Industries, Ltd. was used.

<Foaming agent>

In any Examples and Comparative Examples, ion exchange water was used as a foaming agent.

<Foam stabilizer>

In any of Examples and Comparative Examples, SZ-1142 manufactured by Dow Toray Co., Ltd. was used as a silicone-based foam stabilizer.

<Catalyst>

In any of Examples and Comparative Examples, a solution obtained by dissolving triethylenediamine in dipropylene glycol at a concentration of 33% by weight (Tosoh Corporation, TEDA-L33) and tin octylate (manufactured by Nihon Kagaku Sangyo Co., Ltd., Nikka Octhix Tin) were used as catalysts.

<Isocyanate compound>

In any of Examples and Comparative Examples, tolylene diisocyanate (manufactured by Tosoh Corporation, CORONATE T-80) in which a mixing ratio of 2,4/2.6 isomers was 80/20 was used.

The chlorine-containing polyether polyol and water were mixed according to the blending ratio shown in Table 3 and Table 4, a catalyst and a foam stabilizer were further mixed into the resultant mixture, and the mixture thereof was stirred and mixed with a small high-speed stirrer (PRIMIX manufactured by PRIMIX Corporation) for 20 minutes at 2,000 revolutions per minute to obtain a stirred mixture excluding the isocyanate compound (hereinafter, denoted as a premix).

<Production of polyurethane foam>

The premix adjusted as described above was added with a predetermined amount of an isocyanate compound so that a ratio of the total amount of the isocyanate group (NCO group) to the isocyanate group reactive group (NCO reactive group) that can react with the NCO group including the hydroxyl group (OH group) contained in water, that is, NCO/NCO reactive group was 1.0, the resultant mixture was stirred and mixed with a small high-speed stirrer (PRIMIX manufactured by PRIMIX Corporation) for 8 seconds at 4,000 revolutions per minute, followed by being immediately injected into an acrylic water bath of 250 mm × 250 mm × 250 mm to obtain polyurethane foam.

(Method of measuring physical properties of polyurethane)

(1) Moldability

The produced polyurethane foam was allowed to stand for 24 hours in a thermostatic chamber at 23°C and 50 Rh%, and the appearance thereof was visually observed for moldability.

A (passed): The surface of the foam is smooth, and contraction is not observed.
B (passed): Slight contraction is observed (the physical properties are not affected)
C (not passed): Contraction.

(2) Tensile breaking strength: TB (unit: kPa)

The produced polyurethane foam was allowed to stand for 24 hours in a thermostatic chamber at 23°C and 50 Rh%, and then the tensile breaking strength was measured using a method in accordance with JISK-6400.

A (passed): 85 kPa or more
B (passed): 70 kPa or more and less than 85 kPa
C (not passed): Less than 70 kPa

(3) Tensile breaking elongation: EB (unit:%)

The produced polyurethane foam was allowed to stand for 24 hours in a thermostatic chamber at 23°C and 50 Rh%, and then the tensile breaking elongation was measured using a method in accordance with JISK-6400.

A (passed): 230% or more
B (passed): 210% or more and 230% or less
C (not passed): 210% or less

(4) Flame resistance (combustion distance)

The produced polyurethane foam was held horizontally as a test piece of 200 mm × 100 mm × 10 mm, and a 38 mm flame was brought into contact with the test piece from the left edge for 15 seconds, and a combustion distance

from the A-mark line (a position by 38 mm from the left edge) was measured. The number of tests was set to 10, and the maximum value was defined as the combustion distance of the test piece.

A (passed): Less than 51mm
B (passed): 51mm or more and less than 127mm
C (not passed): 127mm or more

(5) Heat-resistant aging test: Tensile breaking strength retention rate (unit:%)

The produced polyurethane foam was held for 72 hours in a gear oven at 150°C, and then the tensile break strength was measured using a method in accordance with JISK-6400.
Using the value of the tensile breaking strength, which had been measured by the above method, the tensile breaking strength retention rate was calculated according to the following expression.
Tensile breaking strength after heat resistance test / tensile breaking strength before heat resistance test × 100

A (passed): 90% or more
B (passed): 70% or more and less than 90%
C (not passed): Less than 70%

(6) Heat resistance test: Tensile breaking elongation retention rate (unit:%)

The produced polyurethane foam was held for 30 hours in a gear oven at 150°C, and then the tensile breaking elongation was measured using a method in accordance with JISK-6400.
Using the value of the tensile breaking elongation, which had been measured by the above method, the tensile breaking elongation retention rate was calculated according to the following expression.

Tensile breaking elongation after heat resistance test / tensile breaking elongation before heat resistance test × 100

A (passed): 90% or more
B (passed): 70% or more and less than 90%
C (not passed): Less than 70%

(7) Heat resistance test: Flame resistance (combustion distance)

The produced polyurethane foam was held for 30 hours in a gear oven at 150°C, subsequently held horizontally as a test piece of 200 mm × 100 mm × 10 mm, and a 38 mm flame was brought into contact with the test piece from the left edge for 15 seconds, and a combustion distance from the A-mark line (a position by 38 mm from the left edge) was measured. The number of tests was set to 10, and the maximum value was defined as the combustion distance of the test piece.

A (passed): Less than 51mm
B (passed): 51mm or more and less than 127mm
C (not passed): 127mm or more

Example 8.

Polyurethane foam was produced using the chlorine-containing polyether polyol composition [A-1] according to the above-described production method for polyurethane foam, and an evaluation was carried out. The polyurethane foam was such polyurethane foam that had excellent tensile breaking strength, excellent tensile breaking elongation, excellent flame resistance, and excellent heat resistance.

Example 9.

Polyurethane foam was produced using the chlorine-containing polyether polyol composition [A-2] according to the above-described production method for polyurethane foam, and an evaluation was carried out. The polyurethane foam was such polyurethane foam that had excellent moldability, excellent tensile breaking strength, excellent tensile

breaking elongation, excellent flame resistance, and excellent heat resistance.

Example 10.

Polyurethane foam was produced using the chlorine-containing polyether polyol composition [A-3] according to the above-described production method for polyurethane foam, and an evaluation was carried out. The polyurethane foam was such polyurethane foam that had excellent moldability, excellent flame resistance, and excellent heat resistance.

Example 11.

Polyurethane foam was produced using the chlorine-containing polyether polyol composition [A-4] according to the above-described production method for polyurethane foam, and an evaluation was carried out. The polyurethane foam was such polyurethane foam that had excellent moldability, excellent tensile breaking strength, excellent tensile breaking elongation, and excellent flame resistance.

Example 12.

Polyurethane foam was produced using the chlorine-containing polyether polyol composition [A-5] according to the above-described production method for polyurethane foam, and an evaluation was carried out. The polyurethane foam was such polyurethane foam that had excellent moldability, excellent flame resistance, and excellent heat resistance.

Example 13.

Polyurethane foam was produced using the chlorine-containing polyether polyol composition [A-6] according to the above-described production method for polyurethane foam, and an evaluation was carried out. The polyurethane foam was such polyurethane foam that had excellent tensile breaking elongation, excellent flame resistance, and excellent heat resistance.

Example 14.

Polyurethane foam was produced using the chlorine-containing polyether polyol composition [A-7] according to the above-described production method for polyurethane foam, and an evaluation was carried out. The polyurethane foam was such polyurethane foam that had excellent moldability, excellent flame resistance, and excellent heat resistance.

The results of Examples 8 to 14 are shown together in Table 3.

[Table 3]

| Example | | Examples | Example9 | Example10 | Example! 1 | Example 12 | Example 13 | Example14 |
|---|---|---|---|---|---|---|---|---|
| Chlorine-containing polyether polyol composition | A-1 | 50 | - | - | - | - | - | - |
| | A-2 | - | 50 | - | - | - | - | - |
| | A-3 | - | - | 50 | - | - | - | - |
| | A-4 | - | - | - | 50 | - | - | - |
| | A-5 | - | - | - | - | 50 | - | - |
| | A-6 | - | - | - | - | - | 50 | - |
| | A-7 | - | - | - | - | - | - | 50 |
| Commercially available PPG | GP-3000 | 50 | 50 | 50 | 50 | 50 | 50 | 50 |
| Catalyst | TEDA L33 | 0.3 | 0.3 | 0.3 | 0.3 | 0.3 | 0.3 | 0.3 |
| | Nikka Octhix Tin | 0.3 | 0.3 | 0.3 | 0.3 | 0.3 | 0.3 | 0.3 |

(continued)

| Example | | Examples | Example9 | Example10 | Example! 1 | Example 12 | Example 13 | Example14 |
|---|---|---|---|---|---|---|---|---|
| Foam stabilizer | SZ-1142 | 1.0 | 1.0 | 1.0 | 1.0 | 1.0 | 1.0 | 1.0 |
| Foaming agent | Ion exchange water | 4.5 | 4.5 | as | 4.5 | 4.5 | 4.5 | 4.5 |
| Isocyanate compound | CORONATE T-80 | Index 100 | Index 100 | Index 100 | Index 100 | Index 100 | Index 100 | Index 100 |
| Moldability | | Slight contraction B | Favorable moldability A | Favorable moldability A | Favorable moldability A | Favorable moldability A | Slight contraction B | Favorable moldability A |
| Tensile breaking strength kPa | | 92 A | 98 A | 72 B | 70 B | 98 A | 88 A | 85 A |
| Tensile breaking elongation % | | 245 A | 255 A | 212 B | 220 B | 248 A | 203 B | 234 A |
| Flame resistance (combustion distance) mm | | 0 A | 0 A | 13 A | 25 A | 0 A | 0 A | 17 A |
| Heat resistance (150°C, held for 30 hours) | Tensile breaking strength retention rate % | 86 B | 106 A | 98 A | 73 B | 112 A | 83 A | 94 A |
| | Tensile breaking elongation retention rate % | 92 A | 102 A | 90 A | 77 B | 108 A | 96 A | 91 A |
| | Flame resistance (combustion distance) mm | 67 B | 0 A | 26 A | 102 B | 0 A | 0 A | 23 A |

Comparative Example 3.

Polyurethane foam was produced without using the chlorine-containing polyether polyol composition according to the above-described production method for polyurethane foam, and an evaluation was carried out. The polyurethane foam was such polyurethane foam that had inferior tensile breaking strength, inferior tensile breaking elongation, and inferior flame resistance, while having excellent moldability and excellent heat resistance.

Comparative Example 4.

Polyurethane foam was produced by the same operation and evaluated in Comparative Example 3, except that EPOMIK R-140 corresponding to 3 parts by weight with respect to 100 parts by weight of general-purpose PPG was added. The polyurethane foam was such polyurethane foam that had inferior tensile breaking strength, inferior tensile breaking elongation, and inferior flame resistance, while having excellent moldability and excellent heat resistance.

Comparative Example 5.

An attempt was made to produce polyurethane foam using the chlorine-containing polyether polyol composition [B-1] according to the above-described production method for polyurethane foam; however, physical properties could not be measured due to poor moldability.

Comparative Example 6.

Polyurethane foam was produced using the chlorine-containing polyether polyol composition [B-2] according to the above-described production method for polyurethane foam, and an evaluation was carried out. The polyurethane foam was such polyurethane foam that had inferior heat resistance, while having excellent moldability, excellent tensile breaking strength, and excellent tensile breaking elongation.

The results of Comparative Examples 3 to 6 are shown together in Table 4.

[Table 4]

<table>
<tr><th colspan="2">Comparative Example</th><th>Comparative Examples</th><th>Comparative Example4</th><th>Comparative Example5</th><th>Comparative Example6</th></tr>
<tr><td rowspan="2"></td><td>B-1</td><td>-</td><td>-</td><td>-</td><td>50</td></tr>
<tr><td>B-2</td><td>-</td><td>-</td><td>50</td><td>-</td></tr>
<tr><td>Commercially available PPG</td><td>GP-3000</td><td>100</td><td>100</td><td>50</td><td>50</td></tr>
<tr><td>Epoxy compound</td><td>EPOMIK R-140 (Liquid epoxy compound)</td><td>-</td><td>3</td><td>-</td><td>-</td></tr>
<tr><td rowspan="2">Catalyst</td><td>TEDA L33</td><td>0.3</td><td>0.3</td><td>0.3</td><td>0.3</td></tr>
<tr><td>Nikka Octhix Tin</td><td>0.3</td><td>0.3</td><td>0.3</td><td>0.3</td></tr>
<tr><td>Foam stabilizer</td><td>SRX280A</td><td>1.0</td><td>1.0</td><td>1.0</td><td>1.0</td></tr>
<tr><td>Foaming agent</td><td>Ion exchange water</td><td>4.5</td><td>4.5</td><td>4.5</td><td>4.5</td></tr>
<tr><td>Isocyanate compound</td><td>CORONATE T-80</td><td>Index100</td><td>Index100</td><td>Index100</td><td>Index100</td></tr>
<tr><td colspan="2">Moldability</td><td>Favorable moldability<br>A</td><td>Favorable moldability<br>A</td><td>Contraction<br>C</td><td>Favorable moldability<br>A</td></tr>
<tr><td colspan="2">Tensile breaking strength kPa</td><td>69<br>C</td><td>65<br>C</td><td rowspan="6">Measurement not possible due to poor moldability</td><td>94<br>A</td></tr>
<tr><td colspan="2">Tensile breaking elongation %</td><td>208<br>C</td><td>212<br>B</td><td>239<br>A</td></tr>
<tr><td colspan="2">Flame resistance (combustion distance) mm</td><td>127<br>C</td><td>127<br>C</td><td>63<br>B</td></tr>
<tr><td rowspan="3">Heat resistance (150°C, held for 30 hours)</td><td>Tensile breaking strength retention rate %</td><td>89<br>B</td><td>96<br>A</td><td>55<br>C</td></tr>
<tr><td>Tensile breaking elongation retention rate %</td><td>92<br>A</td><td>94<br>A</td><td>67<br>C</td></tr>
<tr><td>Flame resistance (combustion distance) mm</td><td>127<br>C</td><td>127<br>C</td><td>127<br>C</td></tr>
</table>

The present invention has been described in detail and with reference to specific embodiments; however, it is apparent to those skilled in the art that various changes and modifications can be made without departing from the essence and the scope of the present invention.

It is noted that the full contents of the specification, claims, drawings, and abstract of each of Japanese Patent Application 2022-011694, filed on January 28, 2022, and Japanese Patent Application 2023-004082, filed on January

13, 2023, are incorporated herein by reference as the disclosure of the specification of the present invention.

## Claims

1. A chlorine-containing polyether polyol composition comprising:
0.5 to 20 parts by weight of an epoxy compound with respect to 100 parts by weight of a chlorine-containing polyether polyol having a molecular weight of 400 to 5,000.

2. The chlorine-containing polyether polyol composition according to claim 1, wherein the chlorine-containing polyether polyol is a compound represented by the following Formula (1).

[Chemical Formula 1]

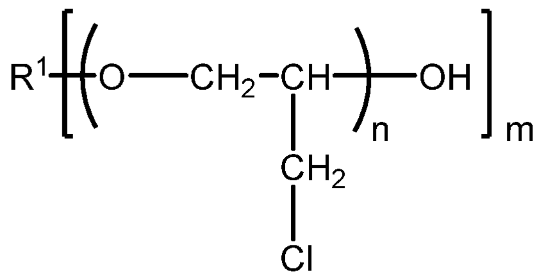
(1)

(In the Formula (1), $R^1$ represents a hydroxy compound residue having a molecular weight of 100 or more and 2,500 or less, n represents an integer of 1 or more and less than 25, and m represents 2 or 3).

3. The chlorine-containing polyether polyol composition according to claim 1 or 2, wherein the epoxy compound is a liquid epoxy compound having an epoxy equivalent of 100 to 1,000.

4. The chlorine-containing polyether polyol composition according to any one of claims 1 to 3, wherein the epoxy compound is any of an epoxidized vegetable fat oil or bisphenol A diglycidyl ether.

5. The chlorine-containing polyether polyol composition according to any one of claims 1 to 4, further comprising: 1 to 100 ppm of an aluminum compound.

6. The chlorine-containing polyether polyol composition according to claim 5, wherein the aluminum compound is aluminum hydroxide.

7. A polyurethane that is a reaction product of the chlorine-containing polyether polyol composition according to any one of claims 1 to 6 and an isocyanate compound.

## INTERNATIONAL SEARCH REPORT

International application No. **PCT/JP2023/001980**

**A. CLASSIFICATION OF SUBJECT MATTER**

***C08G 18/50***(2006.01)i; ***C08G 18/48***(2006.01)i; ***C08G 18/58***(2006.01)i; ***C08L 63/00***(2006.01)i; ***C08L 71/03***(2006.01)i
FI: C08G18/50 003; C08G18/48 066; C08G18/58; C08L71/03; C08L63/00 A

According to International Patent Classification (IPC) or to both national classification and IPC

**B. FIELDS SEARCHED**

Minimum documentation searched (classification system followed by classification symbols)

C08G18/50; C08G18/48; C08G18/58; C08L63/00; C08L71/03

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 44-14590 B1 (TOYO BOSEKI KABUSHIKI KAISHA) 28 June 1969 (1969-06-28) | 1-7 |
| A | CN 110484139 A (GUANGDONG HENGBAOYUAN NEW MATERIAL CO., LTD.) 22 November 2019 (2019-11-22) | 1-7 |
| A | CN 107815085 A (SICHUAN LIZHI JIUCHUANG INTELLECTUAL PROPERTY CO., LTD.) 20 March 2018 (2018-03-20) | 1-7 |
| A | JP 2020-180170 A (TOSOH CORP) 05 November 2020 (2020-11-05) | 1-7 |
| A | JP 2020-180169 A (TOSOH CORP) 05 November 2020 (2020-11-05) | 1-7 |
| A | JP 2018-123294 A (TOSOH CORP) 09 August 2018 (2018-08-09) | 1-7 |
| A | WO 2009/151055 A1 (TOSOH CORP) 17 December 2009 (2009-12-17) | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/001980**

| Patent document cited in search report | Publication date (day/month/year) | Patent family member(s) | Publication date (day/month/year) |
|---|---|---|---|
| JP 44-14590 B1 | 28 June 1969 | (Family: none) | |
| CN 110484139 A | 22 November 2019 | (Family: none) | |
| CN 107815085 A | 20 March 2018 | (Family: none) | |
| JP 2020-180170 A | 05 November 2020 | (Family: none) | |
| JP 2020-180169 A | 05 November 2020 | (Family: none) | |
| JP 2018-123294 A | 09 August 2018 | (Family: none) | |
| WO 2009/151055 A1 | 17 December 2009 | US 2011/0124761 A1<br>EP 2287227 A1<br>CN 102056964 A<br>KR 10-2011-0027680 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H2202573 A
- JP 2022011694 A
- JP 2023004082 A